(19) Europäisches Patentamt
European Patent Office
Office européen des brevets

(11) **EP 2 428 780 A2**

(12) **EUROPEAN PATENT APPLICATION**

(43) Date of publication:
**14.03.2012 Bulletin 2012/11**

(51) Int Cl.:
***G01K 7/13*** (2006.01)

(21) Application number: **11179575.3**

(22) Date of filing: **31.08.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.09.2010 US 881757**

(71) Applicant: **General Electric Company Schenectady, NY 12345 (US)**

(72) Inventor: **Whiteley, Joseph Lee Minden, NV 89423 (US)**

(74) Representative: **Bedford, Grant Richard Global Patent Operation - Europe GE International Inc. 15 John Adam Street London WC2N 6LU (GB)**

(54) **Integrated Cold Junction Compensation Circuit for Thermocouple Connections**

(57)    An integrated cold junction (108) compensation system for a thermocouple (100) connection is disclosed. The system includes a temperature sensor (136) integrated with a terminal (134) at which the thermocouple wires (102, 104) terminate. The temperature sensor (136) is integrated with the terminal (134) proximal to a cold junction (108) of a thermocouple (100), such that the temperature at the sensor (136) location is substantially equal to that at the cold junction (108). The temperature sensor (136) is further in electrical signal isolation from a circuit carrying voltage output by the thermocouple (100).

FIG. 3

EP 2 428 780 A2

## Description

The disclosure relates generally to temperature measurement devices. More particularly, the invention relates to a cold junction compensation (CJC) circuit for thermocouple connections.

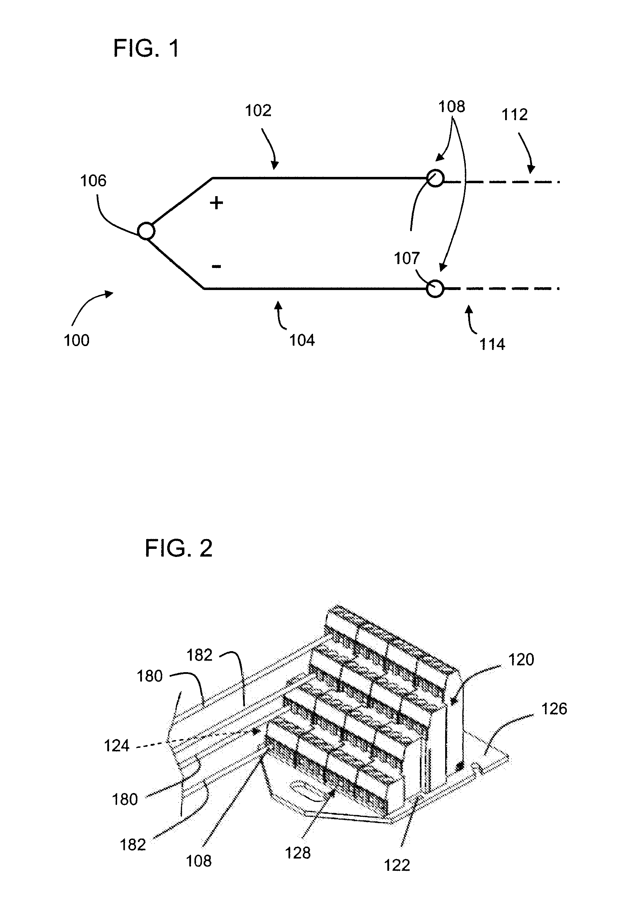

A thermocouple is a junction between two dissimilar metals that produces an electric potential related to a temperature difference. As shown in the thermocouple of FIG. 1, thermocouple 100 is composed of two different thermocouple wires 102, 104 made of dissimilar metals. Wire 102 is designated positive, and wire 104 is designated negative. The positive and negative designations refer to the Seebeck coefficients of the respective metals of which the wires are made. Thermocouple wires 102, 104 are joined at tip 106, e.g., by soldering, welding, or other means. At screw terminals 107, the open ends of wires 102, 104 may electrically connect to wires or traces 112, 114, which may be made of copper or other electrically conductive material. A cold junction 108, or reference junction, is formed here at the termination of dissimilar material wires, e.g., between wires 102, 112; and between wires 104, 114.

In a closed circuit, current is produced when the hot and cold junctions are maintained at different temperatures. Typically, specific metals and alloys are paired to form the junctions, due to their predictable and repeatable relationship between temperature and voltage. Thermocouples may be made from a variety of materials including, for example, iron, constantan, copper, and tin. The type and gauge size of the material used for the thermocouple is typically classified by a letter code, such as T (copper-constantan), J (iron-constantan), E (chromel-constantan), and K (chromel-alumel), for example, which have different voltage-temperature characteristics.

Thermocouples measure the temperature difference between two points, rather than absolute temperature. In order to determine the temperature at the hot junction, the cold junction temperature must be known. In a simplest case, the cold junction is at 0°C (32°F), e.g., in an ice bath. In such a case, the hot junction temperature is a direct translation of the cold junction temperature, and can be found using lookup tables such as those published by the National Bureau of Standards. However, having a junction of known temperature, while useful for laboratory calibration, is inconvenient for most measurement and control applications, particularly in lightweight, hand-held devices and permanent installations in which temperatures at the cold junction vary.

When the cold junction is not at 0°C, the temperature of the cold junction must be found in order to determine the actual hot junction temperature. The output voltage of thermocouple 100 must also be compensated for in order to account for the voltage created by the nonzero cold junction temperature. This process is known as cold junction compensation.

Acquisition of an accurate temperature at the cold junction is essential to accurate cold junction compensation calculations, but presents challenges. As shown in FIG. 2, which depicts a multi-pole terminal block 120 mounted to printed circuit board 126, one solution has been to mount external temperature sensors, such as thermistors 122, 124, to printed circuit board 126 at opposite ends of terminal strip 128. However, these thermistors 122, 124 may not be located near enough to cold junction 108, located at the termination of thermocouple extension wires 180, 182 at terminal block 120, to accurately acquire the actual cold junction temperature. Whether or not thermistors 122, 124 are near enough to cold junction 108 may depend on one or a combination of environmental conditions, including temperature gradient across the distance of the terminal strip where cold junction 108 occurs.

A first aspect of the disclosure provides apparatus comprising a substrate; a terminal block mounted to the substrate; a thermocouple having a thermocouple wire terminating at the terminal block, forming a cold junction; and at least one temperature sensor integrated with a surface of the terminal block. The at least one temperature sensor is located proximal to the cold junction, wherein a temperature at the cold junction is substantially equal to a temperature at the at least one temperature sensor. The at least one temperature sensor is placed in electrical signal communication with the substrate by a plurality of conductive pins.

A second aspect of the disclosure provides a cold junction compensation (CJC) system. The CJC system comprises a thermocouple having a positive thermocouple wire and a negative thermocouple wire, the thermocouple being in electrical signal communication with a terminal block. The thermocouple outputs a voltage to the terminal block, which is mounted to, and in electrical signal communication with, a first tracing on a printed circuit board (PCB). At least one temperature sensor is integrated with the terminal block, wherein each of the at least one temperature sensors is located proximal to a cold junction of the thermocouple, wherein a temperature at the cold junction is substantially equal to a temperature at the at least one temperature sensor. The at least one temperature sensor is in electrical signal communication with a second tracing on the PCB. A computing device for calculating a hot junction temperature is also included, the computing device being in electrical signal communication with the first tracing and the second tracing. The computing device receives an electrical signal representing an output voltage from the thermocouple via the first tracing pair, and an electrical signal representing the cold junction temperature from the temperature sensor via the second tracing pair.

A third aspect of the disclosure provides a cold junction compensation system comprising a thermocouple having a first, positive wire and a second, negative wire joined at a first end of each of the first and second wires to form a first, hot junction; a first thermocouple extension wire electrically connected to the first, positive wire; a second thermocouple extension wire electrically connected to the second, negative wire; a male connector body in electrical communication with the first thermocouple extension wire and the second thermocouple extension wire; and a female connector body into which the male connector body is inserted, forming a cold junction. The female connector body includes a temperature sensor located proximal to the cold junction, wherein a temperature at the cold junction is substantially equal to a temperature at the temperature sensor. The female connector body includes an electrical contact that is made of a dissimilar metal from the first and the second thermocouple extension wire. A first temperature sensor wire and a second temperature sensor wire communicate a cold junction reference signal to a connector, and a first extension wire and a second extension wire communicate an output voltage signal to the connector. The connector is mounted to a substrate. A computing device for carrying out a cold junction compensation calculation is also included, wherein the computing device is in electrical signal communication with the substrate.

Various aspects, advantages and salient features of the invention will become apparent from the following detailed description, which, when taken in conjunction with the annexed drawings, where like parts are designated by like reference characters throughout the drawings, disclose embodiments of the invention.

FIG. 1 depicts a thermocouple.

FIG. 2 depicts a printed circuit board (PCB)-mounted multi-pole terminal block having a temperature sensor mounted to the PCB on each end of a terminal strip.

FIG. 3 shows an apparatus for providing a reference temperature at a cold junction of a thermocouple according to an embodiment of the invention.

FIG. 4 shows an apparatus for providing a reference temperature at a cold junction of a thermocouple, including multi-pole terminal block, according to an embodiment of the invention.

FIG. 5 shows a measurement device for cold junction compensation according to an embodiment of the invention.

FIG. 6 shows a detailed view of a portion of the device depicted in FIG. 5.

At least one embodiment of the present invention is described below in reference to its application in connection with the operation of a thermocouple cold junction compensation circuit. Although some of the embodiments of the invention are described herein and illustrated relative to a thermocouple in electrical communication with a printed circuit board, it is understood that the teachings are equally applicable to other substrates. Further, at least one embodiment of the present invention is described below in reference to a nominal size and including a set of nominal dimensions. However, it should be apparent to those skilled in the art that the present invention is likewise applicable to any suitable thermocouple cold junction measurement apparatus and/or device. Further, it should be apparent to those skilled in the art that the present invention is likewise applicable to various scales of the nominal size and/or nominal dimensions.

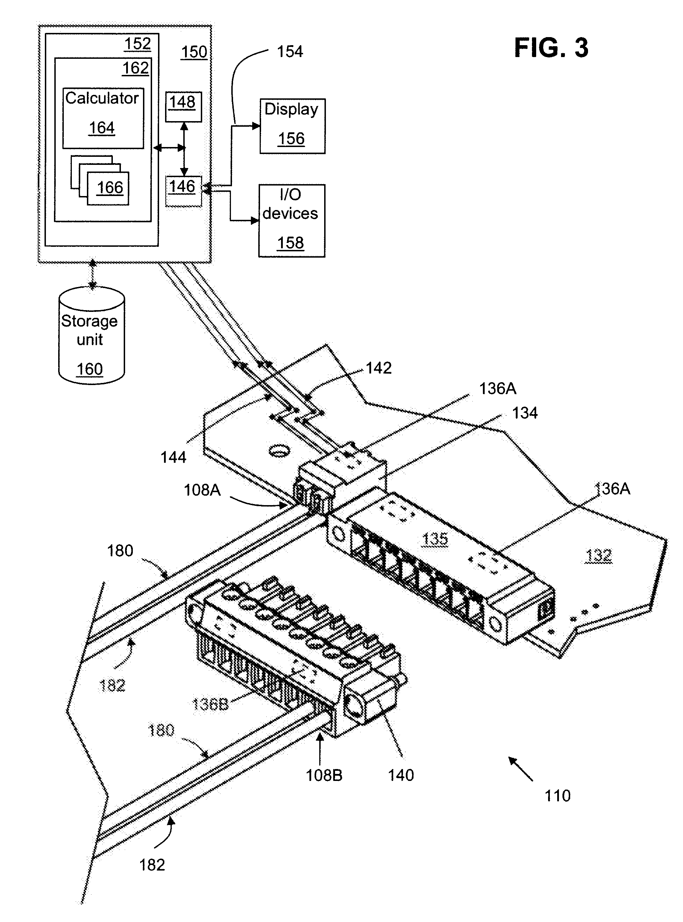

As indicated above, aspects of the invention provide an apparatus for providing a reference temperature at a thermocouple cold junction 108, shown in FIGS. 3-5. In FIG. 3, embodiments of an apparatus 110 for providing a reference temperature at a cold junction 108 of a thermocouple (FIG. 1) are depicted.

A thermocouple, such as the one depicted in FIG. 1, may include thermocouple extension wires 180, 182 (FIG. 3), extending the reach of the thermocouple wires. Thermocouple extension wires 180, 182 are made of the same materials as thermocouple wires 102, 104 (FIG. 1) respectively, such that thermocouple wire 180 is positive and thermocouple wire 182 is negative. As shown in FIG. 3, cold junction 108A-B occurs at a junction of dissimilar metals at terminal block 134, where thermocouple extension wires 180, 182 may contact, e.g., a copper conductive wire. If no thermocouple extension wires 180, 182 are used, thermocouple wires 102, 104 may terminate at cold junction 108A-B in an alternative embodiment. Thermocouple 100 may output electrical energy at a voltage denoted $V_{TC}$ to terminal block 134.

In one embodiment, terminal block 134 may be physically mounted to a substrate 132, which may be, for example, a printed circuit board (PCB) including first pair of tracings 142 and second pair of tracings 144 thereon made of copper or other conductive material. Terminal block 134 may be in electrical signal communication with substrate 132, via a first tracing pair 142 and conductive pins or feet (not pictured) as is known in the art.

In another embodiment, also depicted in FIG. 3, thermocouple extension wires 180, 182 may terminate at a terminal block plug 140. A sensor 136B may be integrated with a surface of a terminal block plug 140 in a manner similar to that described above. Terminal block plug 140 may plug into terminal block header 135, which may be mounted to substrate 132 in a manner similar to terminal block 134. The use of a terminal block 134 or a terminal block plug 140 and terminal block header 135 is a design choice, and depiction of either in various embodiments herein is intended to be non-limiting and merely exemplary.

Tracings 142 carry output electric force generated by thermocouple 100 at voltage $V_{TC}$ away from terminal block 134. In an embodiment, at least one temperature sensor 136A is integrated with a surface of terminal block 134 proximal to, or coincidentally with cold junction 108A. Relative to cold junction 108A, proximal placement of temperature sensor 136A may be such that any physical or environmental obstacles to obtaining accurate cold temperature measurements at the cold junction are avoided. Temperature sensor 136A may be positioned near enough to cold junction 108A that the temperature at temperature sensor 136A is substantially equal to the temperature of cold junction 108A.

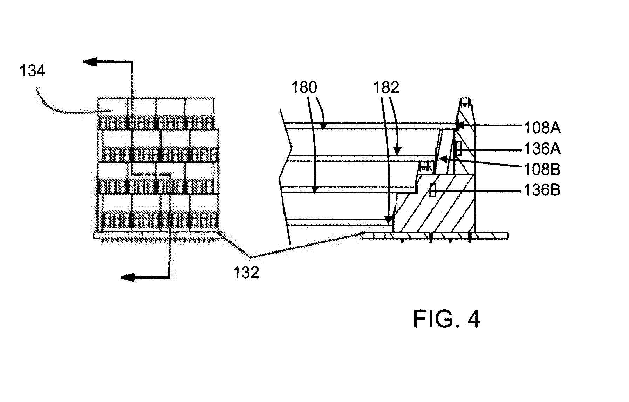

As shown in FIG. 4, in other embodiments terminal block 134 may be a multi-level terminal block having two or more thermocouple wire 180, 182 termination points, forming two or more cold junctions, 108A, 108B. In such an embodiment, two or more temperature sensors 136A-B may be used, each of the two or more temperature sensors 136A-B being located proximal to a cold junction 108A-B, such that the temperature at temperature sensor 136A-B is substantially equal to the temperature of cold junction 108A-B.

In various embodiments, temperature sensors 136A-B may be thermistors, resistive thermal devices (RTDs), or any other appropriate temperature sensor. In some embodiments, the integration of temperature sensors 136A-B with a surface of terminal block 134 or terminal block plug 140 may be accomplished by molding temperature sensor 136 into the body of 134, 140. Alternatively, temperature sensor 136 may be integrated with a surface of 134, 140 by providing a cavity in the body of the terminal block 134 or plug 140, and placing temperature sensor 136 in the cavity. At least one surface of the temperature sensor 136A-B may be exposed to ambient air proximal to cold junction 108A-B.

Regardless of the terminal block style, tracings 142 on substrate 132 may carry an electrical signal from thermocouple extension wires 180, 182 (or thermocouple wires 102, 104) to computing device 150 as depicted in FIG. 3. Temperature sensor 136A-B may further be in electrical signal communication with substrate 132 by a plurality of conductive pins or other means. Temperature sensor 136A-B may further be placed in electrical signal communication with computing device 150 via second pair of tracings 144. Second pair of tracings 144 is in electrical isolation from first pair of tracings 142.

As noted, first pair of tracings 142 and second pair of tracings 144 on substrate 132 form electrically isolated circuit connections with a computing device 150 (FIG. 3) for calculating a hot junction 106 (FIG. 1) temperature, denoted as $T(V_{total})$, as discussed further below. Computing device 150 may receive an electrical signal representing electrical energy generated by thermocouple 100 at an output voltage $V_{TC}$ via first tracings 142, and an electrical signal representing a temperature of cold junction 108 from a temperature sensor 136, 136A-B, denoted as $V_{CJC}$, as discussed further below, via second tracings 144.

As shown in FIG. 3, computing device 150 includes a processing unit 146, a memory 152, input/output (I/O) interfaces 148 operably connected to one another by pathway 154, which provides a communications link between each of the components in computing device 150. Further, computing device 150 is shown in communication with display 156, external I/O devices/resources 158, and storage unit 160. I/O resources/devices 158 can comprise one or more human I/O devices, such as a mouse, keyboard, joystick, numeric keypad, or alphanumeric keypad or other selection device, which enable a human user to interact with computing device 150 and/or one or more communications devices to enable a device user to communicate with computing device 150 using any type of communications link.

In general, processing unit 146 executes computer program code 162 which provides the functions of computing device 150. Modules, such as calculator module 164, which is described further herein, are stored in memory 152 and/or storage unit 160, and perform the functions and/or steps of the present invention as described herein. Memory 152 and/or storage unit 160 can comprise any combination of various types of computer readable data storage media that reside at one or more physical locations. To this extent, storage unit 160 could include one or more storage devices, such as a magnetic disk drive or an optical disk drive. Still further, it is understood that one or more additional components not shown in FIG. 3 can be included in computing device 150. Additionally, in some embodiments one or more external devices 158, display 156, and/or storage unit 160 could be contained within computing device 150, rather than externally as shown, in the form of a computing device 150 which may be portable and/or handheld.

Computing device 150 can comprise one or more general purpose computing articles of manufacture capable of executing program code, such as program 162, installed thereon. As used herein, it is understood that "program code" means any collection of instructions, in any language, code or notation, that cause a computing device having an information processing capability to perform a particular action either directly or after any combination of the following: (a) conversion to another language, code or notation; (b) reproduction in a different material form; and/or (c) decompression. To this extent, program 162 can be embodied as any combination of system software and/or application software.

Further, program 162 can be implemented using a module such as calculator 164 or set of modules 166. In this case, calculator 164 can enable computing device 150 to perform a set of tasks used by program 162, and can be separately developed and/or implemented apart from other portions of program 162. As used herein, the term "component" means any configuration of hardware, with or without software, which implements the functionality described in conjunction therewith using any solution, while the term "module" means program code that enables a computing device 150 to implement the actions described in conjunction therewith using any solution. When fixed in memory 152 or storage unit 160 of a computing device 150 that includes a processing unit 146, a module is a substantial portion of a component that implements the actions. Regardless, it is understood that two or more components, modules, and/or systems may share some/all of their respective hardware and/or software. Further, it is understood that some of the functionality discussed herein may not be implemented or additional functionality may be included as part of computing device 150.

When computing device 150 comprises multiple computing devices, each computing device can have only a portion of program 162 fixed thereon (e.g., one or more modules 164, 166). However, it is understood that computing device 150 and program 162 are only representative of various possible equivalent computer systems that may perform a process described herein. To this extent, in other embodiments, the functionality provided by computing device 150 and program 162 can be at least partially implemented by one or more computing devices that include any combination of general and/or specific purpose hardware with or without program code, including but not limited to a handheld measuring device for cold junction compensation. In each embodiment, the hardware and program code, if included, can be created using standard engineering and programming techniques, respectively.

Regardless, when computing device 150 includes multiple computing devices, the computing devices can communicate over any type of communications link. Further, while performing a process described herein, computing device 150 can communicate with one or more other computer systems using any type of communications link. In either case, the communications link can comprise any combination of various types of wired and/or wireless links; comprise any combination of one or more types of networks; and/or utilize any combination of various types of transmission techniques and protocols.

As noted, computing device 150 includes a calculator module 164 for analyzing an electrical signal provided by each of tracing pairs 142, 144. Calculator module 164 may calculate a temperature of hot junction 106 as follows.

Voltage output by thermocouple 100 and transmitted to computing device via thermocouple wires 102, 104; thermocouple extension wires 180, 182; and tracings 142 is measured, and denoted $V_{TC}$.

Voltage representing the signal from the cold junction compensation circuit, generated by current passing over temperature sensor 136 and transmitted to computing device 150 via tracings 144, is measured and denoted $V_{CJC}$.

$V_{CJC}$ is converted to a cold junction compensation temperature (T) using the voltage $V_{CJC}$ and a voltage vs. temperature curve as is known in the art.

The voltage as a function of temperature at cold junction 108, denoted V(T), is calculated for the specific type of thermocouple 100 in use as a function of T, the temperature at the cold junction, using a reverse polynomial equation for the particular type of thermocouple wire being used:

$$V(T) = C_0 + C_1 T + C_2 T^2 \ldots$$

where $C_0$, $C_1$, and $C_2$ are coefficients for the thermocouple type, as known in the art and as published by, e.g., the National Institutes of Standards and Technology (NIST).

Total voltage at cold junction 108, denoted $V_{total}$, is then determined by adding the voltage as a function of temperature at cold junction 108, denoted V(T), to the measured thermocouple output voltage ($V_{TC}$):

$$V_{total} = V(T) + V_{TC}$$

A final temperature, denoted $T(V_{total})$, may then be calculated as a function of $V_{total}$ using a thermocouple-linearizing equation:

$$T(V_{total}) = K_0 + K_1 V_{total} + K_2 V_{total}^2 \ldots$$

where $K_0$, $K_1$, and $K_2$, are published coefficients as known in the art and as published by, e.g., the National Institutes of Standards and Technology (NIST).

As discussed herein, the cold junction compensated temperature, represented by $T(V_{total})$, includes compensation for a voltage created at cold junction 108 by a nonzero cold junction 108 temperature, as known in the art.

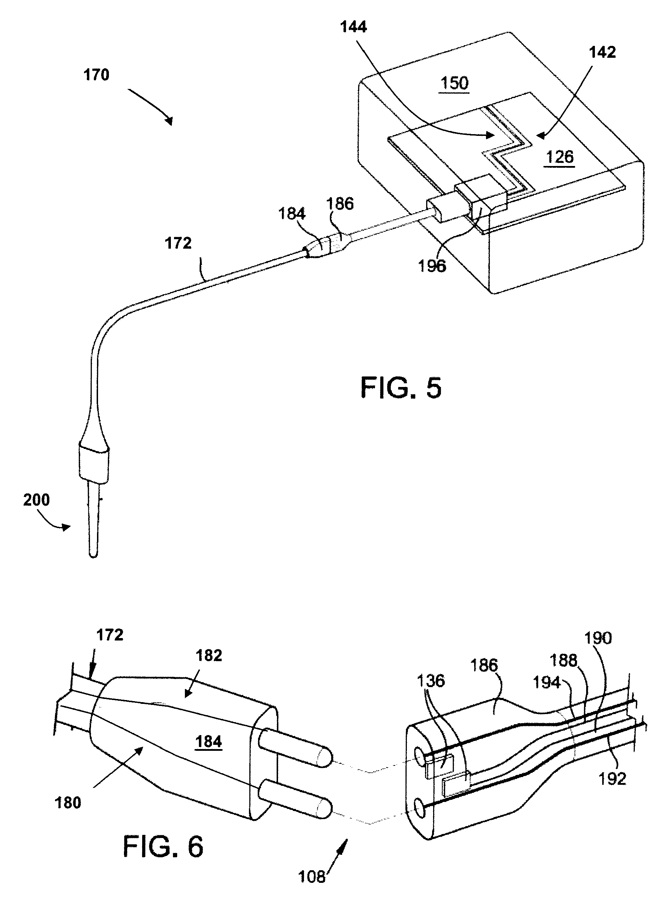

FIGS. 5-6 depict an additional embodiment of a cold junction compensation system 170. As shown in FIG. 5, a thermocouple probe 200 containing a thermocouple 100 is operably connected with an insulated cable 172. Insulated cable 172 contains thermocouple extension wires 180, 182 in electrical isolation from one another.

As shown in FIG. 5, and in greater detail in FIG. 6, insulated cable 172, which originates at thermocouple probe 200, terminates with male connector body 184, which includes two prongs, one in electrical signal connection with each of thermocouple extension wires 180 and 182. Male connector body 184 is shaped and dimensioned for insertion into female connector body 186, and male and female connector bodies 184, 186 include a pair of mated electrical contacts. Female connector body 186 further includes extension wires 192, 194, which are in electrical signal communication with thermocouple wires 180, 182 respectively when male connector body 184 is inserted into female connector body 186. Extension wires 192, 194 are made of different materials from that of thermocouple wires 102, 104, and thermocouple extension wires 180, 182. Extension wires 192, 194 may be, for example, copper. Female connector body 186 also includes temperature sensor wires 188, 190, which are in electrical signal communication with temperature sensors 136, which may be integrated with female connector body 186 as shown in FIG. 6. Each temperature sensor 136 may, in various embodiments, be a thermistor, an RTD, or other temperature sensor device. In one embodiment, temperature sensor 136 may be molded into female connector body 186. In another embodiment, a cavity may be molded into female connector body 186 into which a temperature sensor 136 may be placed. In either case, temperature sensor 136 is positioned in female connector body such that it is located proximal to cold junction 108 as described above.

As shown in FIGS. 5-6, temperature sensor wires 188, 190, are in electrical signal communication with temperature sensors 136, and are further in electrical signal communication with printed circuit board 126 or other substrate 132 via connector 196, and electrical signal isolation from wires 192, 194. Wires 188, 190 communicate a signal representative of the reference temperature at cold junction 108 from temperature sensor 136 to a substrate 132, which may be a printed circuit board 126 as in FIG. 5, or another substrate, via connector 196. This signal representing the temperature at cold junction 108 ($V_{CJC}$) is further communicated to computing device 150 via electrically isolated tracings 144 as described above. First and second extension wires 192, 194 are further in electrical signal communication with connector 196, and transmit an output voltage signal ($V_{TC}$) to connector 196. Connector 196 is mounted to substrate 132; and is further in electrical signal communication with substrate 132 and computing device 150 via electrically isolated tracings 142, as described above. In an embodiment as shown in FIG. 5, computing device 150 may be a handheld measuring device for cold junction compensation. Computing device 150 may further function as described above to use a reference temperature at cold junction 108 to determine a temperature at hot junction 106.

Technical effects of the various embodiments of the present invention may include providing an accurate reference temperature at the location of a cold junction of a thermocouple. Other technical effects associated with the various embodiments of the present invention may include the ability to accurately carry out cold junction compensation calculations, and accurately determine a hot junction temperature where the cold junction is at a nonzero (i.e. not 0°C) temperature.

As used herein, the terms "first," "second," and the like, do not denote any order, quantity, or importance, but rather are used to distinguish one element from another, and the terms "a" and "an" herein do not denote a limitation of quantity, but rather denote the presence of at least one of the referenced item. The modifier "about" used in connection with a quantity is inclusive of the stated value and has the meaning dictated by the context (e.g., includes the degree of error associated with measurement of the particular quantity). The suffix "(s)" as used herein is intended to include both the singular and the plural of the term that it modifies, thereby including one or more of that term (e.g., the metal(s) includes one or more metals).

While various embodiments are described herein, it will be appreciated from the specification that various combinations of elements, variations or improvements therein may be made by those skilled in the art, and are within the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

Various aspects and embodiments of the present invention are defined by the following numbered clauses:

    1. An apparatus comprising:

        a substrate;

        a terminal block mounted to the substrate;

        a thermocouple, wherein a thermocouple wire terminates at the terminal block, forming a cold junction; and

        at least one temperature sensor integrated with a surface of the terminal block or proximal to the cold junction, wherein a temperature at the cold junction is substantially equal to a temperature at the at least one temperature sensor;

        wherein the at least one temperature sensor is placed in electrical signal communication with the substrate by a plurality of conductive pins.

    2. The apparatus of clause 1, wherein the at least one temperature sensor is olded into the terminal block.

    3. The apparatus of any preceding clause, wherein the terminal block further comprises at least one cavity in a surface of the terminal block, and the at least one temperature sensor is placed in the at least one cavity, wherein at least one surface of the at least one temperature sensor is exposed to ambient air next to the cold junction.

    4. The apparatus of any preceding clause, wherein the at least one temperature sensor further comprises at least one thermistor.

    5. The apparatus of any preceding clause, wherein the at least one temperature sensor further comprises at least one resistive thermal device (RTD).

6. The apparatus of any preceding clause, wherein the substrate further comprises a printed circuit board (PCB).

7. The apparatus of any preceding clause, wherein the at least one temperature sensor is integrated with a terminal block plug.

8. The apparatus of any preceding clause, wherein the terminal block further comprises a multi-level terminal block having two or more thermocouple wiring termination points, and wherein the at least one temperature sensor further comprises two or more temperature sensors, each of the two or more temperature sensors being located proximal to one of the two or more thermocouple wiring termination point.

9. A cold junction compensation system, the system comprising:

a thermocouple having a positive thermocouple wire and a negative thermocouple wire, the thermocouple being in electrical signal communication with a terminal block, wherein the thermocouple outputs a voltage to the terminal block, and wherein the terminal block is mounted to and in electrical signal communication with a first tracing pair on a printed circuit board (PCB);

at least one temperature sensor integrated with the terminal block, wherein each at least one temperature sensor is located proximal to a cold junction of the thermocouple, wherein a temperature at the cold junction is substantially equal to a temperature at each temperature sensor; and each temperature sensor is in electrical signal communication with a second tracing pair on the PCB; and

a computing device for calculating a hot junction temperature, the computing device being in electrical signal communication with the first tracing pair and the second tracing pair,

wherein the computing device receives an electrical signal representing an output voltage from the thermocouple via the first tracing pair, and an electrical signal representing the cold junction temperature from the temperature sensor via the second tracing pair.

10. The system of any preceding clause, wherein the hot junction temperature is calculated using the equation,
$$T(V_{total}) = K_0 + K_1 V_{total} + K_2 V_{total}^2 \dots$$
wherein
$T(V_{total})$ = the hot junction temperature;
$K_0$, $K_1$, and $K_2$ are coefficients; and

$V_{total}$ is a total voltage at the cold junction, equal to a voltage as a function of temperature at the cold junction and the voltage output by the thermocouple.

11. The system of any preceding clause, wherein the at least one temperature sensor is integrated with the terminal block by molding the at least one temperature sensor into the terminal block.

12. The system of any preceding clause, wherein the at least one temperature sensor is integrated with the terminal block by providing at least one cavity in the terminal block, and placing the at least one temperature sensor in the at least one cavity, wherein at least one surface of the at least one temperature sensor is exposed to ambient air at the cold junction.

13. The system of any preceding clause, wherein the at least one temperature sensor further comprises at least one thermistor.

14. The system of any preceding clause, wherein the at least one temperature sensor further comprises at least one resistive thermal device (RTD).

15. The system of any preceding clause, further comprising affixing the at least one temperature sensor to a terminal block plug.

16. The system of any preceding clause, wherein the terminal block further comprises a multi-level terminal block having two or more thermocouple wiring termination points, and wherein the at least one temperature sensor further comprises two or more temperature sensors, each of the two or more temperature sensors being located proximal to one of the two or more thermocouple wiring termination point.

17. A cold junction compensation system comprising:

a thermocouple having a first, positive wire and a second, negative wire joined at a first end of each of the first and second wires to form a first, hot junction;

a first thermocouple extension wire electrically connected to the first, positive wire;

a second thermocouple extension wire electrically connected to the second, negative wire;

a male connector body in electrical communication with the first thermocouple extension wire and the second thermocouple extension wire;

a female connector body into which the male connector body is inserted, forming a cold junction,

wherein the female connector body includes a temperature sensor located proximal to the cold junction, wherein a temperature at the cold junction is substantially equal to a temperature at the temperature sensor, and wherein an electrical contact in the female connector body is a dissimilar metal from the first and the second thermocouple extension wire;

a first temperature sensor wire and a second temperature sensor wire for communicating a cold junction reference signal to a connector,

a first extension wire and a second extension wire for communicating an output voltage signal to the connector;

wherein the connector is mounted to a substrate; and

a computing device for carrying out a cold junction compensation calculation, wherein the computing device is in electrical signal communication with the substrate.

18. The system of any preceding clause, wherein the computing device comprises:

a memory;
a processing unit; and
a program product loaded in the memory which when executed by the processing unit, calculates a temperature of the hot junction using the equation,
$T(V_{total}) = K_0 + K_1 V_{total} + K_2 V_{total}^2 \dots$
wherein
$T(V_{total})$ = the hot junction temperature;
$K_0$, $K_1$, and $K_2$ are coefficients; and
$V_{total}$ is a total voltage at the cold junction, equal to a voltage as a function of temperature at the cold junction and the voltage output by the thermocouple.

19. The system of any preceding clause, wherein the substrate further comprises a printed circuit board (PCB), and the computing device further comprises a handheld device.

20. The system of any preceding clause, wherein the temperature sensor is one of a thermistor or a resistive thermal device (RTD).

## Claims

1. An apparatus (110) comprising:

a substrate (132);
a terminal block (134) mounted to the substrate (132);
a thermocouple (100), wherein a thermocouple wire (102, 104) terminates at the terminal block (134), forming a cold junction (108); and
at least one temperature sensor (136) integrated with a surface of the terminal block (134) or proximal to the cold junction (108), wherein a temperature at the cold junction (108) is substantially equal to a temperature at the at least one temperature sensor (136);
wherein the at least one temperature sensor (136) is placed in electrical signal communication with the substrate (132) by a plurality of conductive pins (138).

2. The apparatus (110) of claim 1, wherein the at least one temperature sensor (136) is molded into the terminal block (134).

3. The apparatus (110) of any preceding claim, wherein the terminal block (134) further comprises at least one cavity in a surface of the terminal block (134), and the at least one temperature sensor (136) is placed in the at least one cavity, wherein at least one surface of the at least one temperature sensor (136) is exposed to ambient air next to the cold junction (108).

4. The apparatus (110) of any preceding claim, wherein the at least one temperature sensor (136) further comprises at least one thermistor.

5. The apparatus (110) of any preceding claim, wherein the at least one temperature sensor (136) further comprises at least one resistive thermal device (RTD).

6. The apparatus (110) of any preceding claim, wherein the substrate (132) further comprises a printed circuit board (PCB) (126).

7. The apparatus (110) of any preceding claim, wherein the at least one temperature sensor (136) is integrated with a terminal block plug (140).

8. The apparatus (110) of any preceding claim, wherein the terminal block (134) further comprises a multi-level terminal block (120) having two or more thermocouple wiring (102, 104) termination points, and wherein the at least one temperature sensor (136) further comprises two or more temperature sensors (136), each of the two or more temperature sensors (136) being located proximal to one of the two or more thermocouple wiring (102, 104) termination point.

**9.** A cold junction (108) compensation system, the system comprising:

a thermocouple (100) having a positive thermocouple wire (102) and a negative thermocouple wire (104), the thermocouple (100) being in electrical signal communication with a terminal block (134), wherein the thermocouple (100) outputs a voltage to the terminal block (134), and wherein the terminal block (134) is mounted to and in electrical signal communication with a first tracing pair (142) on a printed circuit board (PCB) (126);
at least one temperature sensor (136) integrated with the terminal block (134), wherein each at least one temperature sensor (136) is located proximal to a cold junction (108) of the thermocouple (100), wherein a temperature at the cold junction (108) is substantially equal to a temperature at each temperature sensor (136); and each temperature sensor (136) is in electrical signal communication with a second tracing pair (144) on the PCB (126); and
a computing device (150) for calculating a hot junction (106) temperature, the computing device (150) being in electrical signal communication with the first tracing pair (142) and the second tracing pair (144),
wherein the computing device (150) receives an electrical signal representing an output voltage from the thermocouple (100) via the first tracing pair (142), and an electrical signal representing the cold junction (108) temperature from the temperature sensor (136) via the second tracing pair (144).

**10.** The system of claim 9, wherein the hot junction (106) temperature is calculated using the equation,

$T(V_{total}) = K_0 + K_1 V_{total} + K_2 V_{total}^2 \ldots$

wherein

$T(V_{total})$ = the hot junction temperature;
$K_0$, $K_1$, and $K_2$ are coefficients; and
$V_{total}$ is a total voltage at the cold junction (108), equal to a voltage as a function of temperature at the cold junction (108) and the voltage output by the thermocouple (100).

FIG. 1

FIG. 2

**FIG. 3**

134

180    182

108A
136A
108B
136B

132

FIG. 4

170

144

142

150

126

184  186

172

196

200

**FIG. 5**

172

182

190

186  188

136  194

184

180

192

**FIG. 6**

108